# EUROPÄISCHE PATENTSCHRIFT

(11) **EP 0 839 416 B1**
(45) Veröffentlichungstag und Bekanntmachung des Hinweises auf die Patenterteilung: **01.10.2003**
(21) Anmeldenummer: 96922759.4
(22) Anmeldetag: 09.07.1996
(51) Int. Cl.: H04L 7/04

(54) **EINRICHTUNG ZUR SYNCHRONISIERUNG DES BLOCKZÄHLERS IN EINEM RDS-EMPFÄNGER**
SYSTEM FOR SYNCHRONIZING THE BLOCK COUNTER IN A RADIO-DATA-SYSTEM (RDS) RECEIVER
SYSTEME POUR SYNCHRONISER LE COMPTEUR DE BLOCS DANS UN RECEPTEUR RDS

(30) Priorität: 20.07.1995 DE 19526447
(43) Veröffentlichungstag der Anmeldung: 06.05.1998
(73) Patentinhaber: BLAUPUNKT-WERKE GMBH, 31132 Hildesheim (DE)
(72) Erfinder: NYENHUIS, Detlev, D-31079 Sibbesse (DE); HEGELER, Wilhelm, D-31134 Hildesheim (DE)
(74) Vertreter: Friedmann, Jürgen, Dr.-Ing.
(86) Internationale Anmeldenummer: DE9601238
(87) Internationale Veröffentlichungsnummer: WO97004550

(56) Entgegenhaltungen:
- EP-A- 0 292 966
- EP-A- 0 491 084

## Beschreibung

### Stand der Technik

Gegenstand des Schutzrechts sind eine Einrichtung zur Synchronisation des Blockzählers in einem RDS-Empfänger mit einem Decoder, dessen Merkmale im Oberbegriff des Anspruchs 1 wiedergegeben sind.

Verfahren zur Synchronisation des Blockzählers in einem RDS-Empfänger sind an sich aus der DIN EN 50 067 bekannt, in der auch das Radio-Daten-System (RDS) spezifiziert ist. Die Theorie, die der Synchronisation des Blockzählers zugrunde liegt, ist im Anhang C der erwähnten DIN-Norm dargelegt.

Eine Einrichtung zur Synchronisation des Blockzählers ist in den Unterlagen der älteren, nicht vorveröffentlichten Patentanmeldung P 195 11 147.8 beschrieben.

Das Prinzip der Arbeitsweise der Decoder in einem RDS-Empfänger ist im Anhang B der DIN EN 50 067 erläutert.

Eine spezielle Ausführungsform des Decoders ist in den Unterlagen der älteren, nicht vorveröffentlichten Patentanmeldung P 195 20 685.1 angegeben. Dieser Decoder ist durch die im Oberbegriff des Anspruchs 1 genannten Merkmale erfaßt.

Aus der EP-A-0 491 084 ist eine Vorrichtung zum Erzeugen von Synchronsignalen zur Blocksynchronisation blockcodierter Datentelegramme bekannt, bei der zur Synchronisierung des Empfängers auf gesendete Datenblöcke den übertragenen Datenblöcken senderseitig überlagerte Offset-Worte verwendet werden. In einem Offset-Wort-Detektor werden dazu die dem übertragenen Signal überlagerten Offsetworte bestimmt und diese mit in einer Logikanordnung generierten Offset-Worten verglichen. Bei Übereinstimmung des detektierten mit dem zu erwartenden in der Logikanordnung generierten Offset-Wort ist Synchronität gegeben, und es wird ein Synchronsignal abgegeben.

Weiterhin ist aus der EP-A-0 292 966 eine Anordnung zum Empfang digitaler Daten bekannt, bei der eine Synchronisierung des Empfängers mittels eines übertragenen speziellen Bitmusters (unique word) erreicht wird. Zur besseren Synchronisierung auch bei schlechtem Empfang ist eine Korrektur eines fehlerhaften Synchronisierungs-Bitmusters vorgesehen.

### Vorteile der Erfindung

Die Erfindung unterschiedet sich von der in der erstgenannten Patentanmeldung DE-A-1 95 11 147 beschriebenen Einrichtung durch die im Kennzeichen des Anspruchs 1 aufgeführten Merkmale.

Die Erfindung hat den Vorteil, daß die Verfahrensschritte zur Synchronisation des Blockzählers in die Verfahrensschritte in dem genannten speziellen Decoder zur Decodierung und gegebenenfalls zur Fehlerkorrektur integriert sind und wesentliche Bausteine des Decoders auch zur Synchronisation des Blockzählers Verwendung finden können. Der Aufwand für die Synchronisation des Blockzählers und für die Decodierung des Datenblocks kann damit erheblich verringert werden. Ferner können die Vorteile des den Unterlagen der zweitgenannten Patentanmeldung DE-A-1 95 20 685.1 zu entnehmenden Decoders gewahrt bleiben.

Der Anspruch 2 kennzeichnet eine Variante des Anspruchs 1 mit einer geringeren Anzahl von Verfahrensschritten im Decoderprogramm. In der Einrichtung nach Anspruch 4 sind die erforderlichen Verfahrensschritte weiter reduziert.

Im Kennzeichen des Anspruchs 5 sind die Mittel näher bezeichnet, in denen sich der Decoder für die erfindungsgemäße Einrichtung von dem aus der zweitgenannten älteren Patentanmeldung 1 95 20 685.1 zu entnehmenden Decoder unterscheidet.

Bei der weiteren Erläuterung der Erfindung wird auf die beigefügte Zeichnung Bezug genommen. Darin zeigen:
- Fig. 1: ein Blockschaltbild einer Schaltungsanordnung, die sowohl der Synchronisierung des Blockzählers als auch der Decodierung eines Datenblocks dient,
- Fig. 2: die Synchronisierungsschaltung im Detail.

Nach der DIN EN 50 067 wird auf der Senderseite dem letztlich im RDS-Empfänger an sich interessierenden Informationswort, das aus sechzehn Bits besteht, ein Prüfwort angehängt, das aus dem Informationswort errechnet ist und aus zehn Bits besteht. Informationswort und Prüfwort zusammen bilden ein Datenwort. Dem Prüfwort wird im Sender außerdem ein Offsetwort überlagert. Das Offsetwort ergibt sich aus der Stellung, die ein Datenwort innerhalb einer Datengruppe einnimmt, die stets von vier Datenworten gebildet wird.

Dem ersten, zweiten und vierten Datenwort innerhalb der Datengruppe ist jeweils immer dasselbe Offsetwort zugeordnet, während für das dritte Datenwort eines von zwei verschiedenen Offsetworten verwendet wird.

Daneben wird bei einem bestimmten Datentransfer auf die Unterscheidung von vier Datenworten innerhalb einer Datengruppe verzichtet. Hier wird allen Datenworten dasselbe Offsetwort überlagert. Somit sind zur Zeit sechs unterschiedliche Offsetworte im Radio-Daten-System definiert. Damit ist einerseits nur deren Verwendung in dem nachfolgend beschriebenen Verfahren zulässig, andererseits müssen aber alle sechs Offsetworte von dem Offsetwortgenerator in dem Decoder für das Verfahren erzeugbar sein. Nach der Überlagerung des Offsetwortes spricht man von einem sechsundzwanzig Bit umfassenden Datenblock.

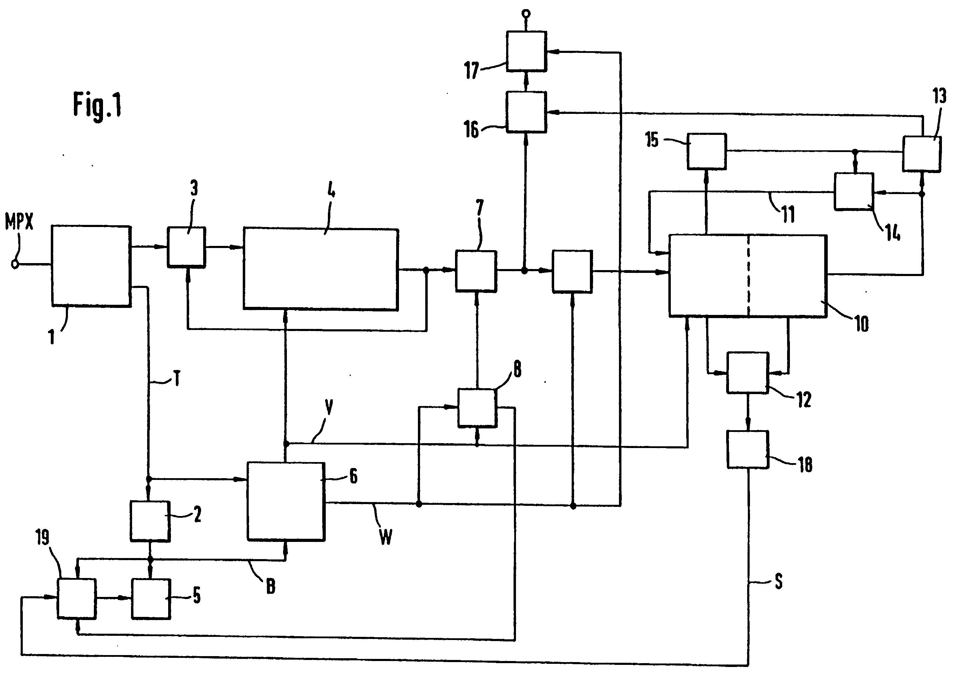

Auf dem Weg vom Sender zum Empfänger können die zu übertragenden Bits in dem Radio-Daten-System fehlerhaft werden. Das Radio-Daten-System erlaubt es, bis zu fünf Bit-Fehler in einem Datenblock zu korrigieren, wenn zuvor einoder mehrmals ein vollständiger Datenblock fehlerfrei empfangen worden ist und dabei der Blockzähler im RDS-Empfänger synchronisiert werden konnte. Zur Synchronisation muß in dem vom RDS-Empfänger empfangenen, an sich unendlichen Bit-Strom der Beginn eines Datenblocks erkannt werden. Die Mittel zur Synchronisation werden im folgenden anhand der Fig. 1 beschrieben.

In jedem RDS-Rundfunkempfänger ist an den MPX-Signalausgang des nicht näher dargestellten Rundfunkempfangsteils ein Radio-Daten-Empfänger 1 angeschlossen. Auf die Darstellung von Einzelheiten des Radio-Daten-Empfängers kann verzichtet werden, da in der erwähnten DIN EN 50 067 ein typischer Radio-Daten-Empfänger näher erläutert ist. Hier ist nur von Interesse, daß in dem Radio-Daten-Empfänger 1 die einzelnen Bits der Radio-Daten und der Bit-Takt regeneriert werden.

Nach dem Einschalten des Rundfunkgerätes setzt der Radio-Daten-Empfänger mit der Ausgabe von Bit-Takten ein und der Bit-Zähler 2 beginnt zunächst mit der Zählung der Anzahl der über die Taktleitung T empfangenen Bit-Takte.

Die gleichzeitig im Radio-Daten-Empfänger 1 regenerierten Bits werden über einen Datenumschalter 3 in ein 26-Bit-Schieberegister 4 eingelesen und dort zwischengespeichert. Nach dem Empfang von sechsundzwanzig Bit-Takten wird am Ausgang B des Bit-Zählers 2 ein Blocktakt erzeugt. Der Bit-Zähler 2 wird sodann selbsttätig auf Null zurückgestellt. Die Anzahl der Blocktakte wird in einem 2-Bit-Blockzähler 5 gezählt. Am Ausgang des Blockzählers 5 läßt sich nach jeweils vier Blocktakten ein Gruppentakt abnehmen. Dann wird auch der Blockzähler 5 selbsttätig auf Null zurückgestellt.

Innerhalb einer jeden Gruppe ist jedem Datenblock somit ein anderer Stand des Blockzählers 5 zugeordnet.

Abgesehen von Zufällen ist das erste empfangene Bit nicht zugleich das erste Bit eines Datenblocks. Daher muß der Beginn des nächsten Datenblocks in den nachfolgenden Baugruppen ermittelt werden, bevor das Datenwort zur Weiterverarbeitung schließlich ausgegeben werden kann. Die einzelnen hierfür erforderlichen Verfahrensschritte werden von einer Steuereinheit 6 gesteuert.

Nach dem Ausführungsbeispiel in Fig. 1 ist der Ausgang des Schieberegisters 4 zum einen über den Datenumschalter 3 in dessen Stellung II an den Eingang des Schieberegisters 4 zurückgeführt, so daß der Inhalt in dem Schieberegister 4 rotieren kann. Zum anderen ist der Ausgang des Schieberegisters 4 mit dem ersten Eingang einer ersten X-OR-Stufe 7 verbunden. Der zweite Eingang dieser X-OR-Stufe 7 ist an den Ausgang eines Offsetwort-Generators 8 angeschlossen.

Über eine Sperrstufe 9 ist der Eingang eines 10-Bit-Syndromregisters 10 mit dem Ausgang der ersten X-OR-Stufe 7 verbunden. In dem Syndromregister 10 sind dessen zehn Speicherzellen über eine Verknüpfungsschleife 11 zur Berechnung eines Syndromwertes untereinander verknüpft. Auf die Beschreibung der weiteren Einzelheiten der Verknüpfungsschleife kann hier verzichtet werden, da sie ausführlich in der Anlage B zur DIN EN 50 067 erläutert sind.

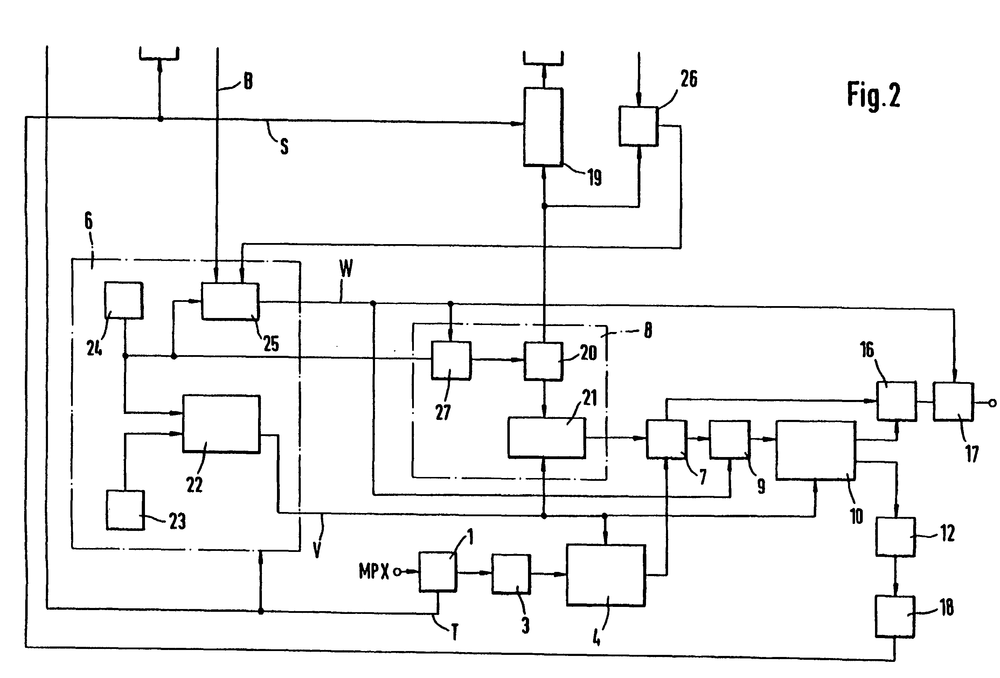

Für die Synchronisierung ist eine Synchronisierschaltung 12 an das Syndromregister 10 angeschlossen, welche die Berechnung des Syndromwertes Null in dem Syndromregister 10 erkennt. Sobald dieser Syndromwert erkannt ist, ist die wesentliche Voraussetzung für die Synchronisierung des Blockzählers erfüllt. Auf weitere Einzelheiten der Synchronisierung wird bei der Erläuterung der Fig. 2 eingegangen.

Zur Decodierung eines Datenblocks nach der Synchronisierung und gegebenenfalls zur Fehlerkorrektur liegt im Ausgang des eben erwähnten Syndromregisters 10 eine Torschaltung 13 und im Eingang der Verknüpfungsschleife ein Schleifentor 14, die beide von einem NOR-Gatter 15 gesteuert werden. Der Ausgang der Torschaltung 13 ist mit dem zweiten Eingang einer zweiten X-OR-Stufe 16 verbunden, deren erster Eingang direkt an dem Ausgang der ersten X-OR-Stufe 7 angeschlossen ist. Die Torschaltung 17 hinter der zweiten X-OR-Stufe 16 dient als Ausgang für die Datenworte.

Die Voraussetzungen einer gegebenenfalls möglichen Fehlerkorrektur sind in der DIN EN 50 067 festgehalten. Der Ablauf der Ausgabe eines fehlerfreien oder fehlerkorrigierten Datenwortes mit den zuletzt erwähnten Bausteinen ist ausführlich in der zweitgenannten, älteren Patentanmeldung P 1 95 20 685.1 erläutert.

Wie aus der bisherigen Erläuterung der Fig. 1 ersichtlich ist, verzweigt sich der Datenfluß für die Synchronisierung des Blockzählers und für die Decodierung des Datenblocks und die gegebenenfalls mögliche Fehlerkorrektur in einem Datenblock erst auf der Ausgangsseite des Syndromregisters 10. In der gemeinsamen Nutzung des Schieberegisters 4, des ersten X-OR-Gliedes 7, des Offsetwort-Generators 8 und des Syndromregisters 10 für beide Vorgänge zeigt sich eine wesentliche Eigenheit des erfindungsgemäßen Verfahrens.

In der erstgenannten älteren Patentanmeldung P 1 95 11 147.8 ist bereits dargelegt, daß zur Synchronisierung des Blockzählers ein 26-Bit-Schieberegister in jeder Bit-Periode mindestens n-mal ausgelesen wird, wobei n gleich der Anzahl der zulässigen Offsetworte ist, daß ferner bei jedem Auslesen der aus dem Schieberegister ausgelesene Datenblock mit einem anderen der von dem Offsetwort-Generator 8 erzeugten zulässigen n Offsetworte X-OR-verknüpft wird, und daß danach das am Ausgang der X-OR-Stufe wieder verfügbare Datenwort in ein Syndromregister eingelesen wird und dabei das Syndrom des Datenwortes berechnet wird und wie bei Errechnung des Syndromwertes Null eine Synchronisation des Blockzählers erfolgen kann.

In der zweitgenannten, älteren Patentanmeldung P 1 95 20 685.1 wurde schon dargelegt, daß zur Fehlerkorrektur jeweils in der letzten Bit-Periode eines Datenblocks ein 26-Bit-Schieberegister zweimal ausgelesen wird, wobei bei jedem Auslesen der ausgelesene Datenblock mit demselben Offsetwort X-OR-verknüpft wird, daß beim ersten Auslesen das nach der Verknüpfung verfügbare Datenwort in ein Syndromregister eingelesen wird und beim Einlesen das Syndrom des Datenwortes berechnet wird, und daß beim zweiten Auslesen das Datenwort ausgegeben wird und wie es dabei gegebenenfalls korrigiert wird. Die Erfindung lehrt nun, daß die Synchronisation des Blockzählers in das Verfahren zur Fehlerkorrektur integriert werden kann und dabei das Schieberegister 4, der Offsetwort-Generator 8, die erste X-OR-Stufe 7 und das Syndromregister 10 gemeinsam für die Synchronisierung und die mögliche Fehlerkorrektur einsetzbar sind, wenn - gesteuert von der Steuereinheit 6 - das Schieberegister 4 in jeder Bit-Periode 2n-mal ausgelesen wird, vor Beginn jedes ungeradzahligen Auslesens der Offsetwort-Generator 8 auf die Erzeugung des nächstfolgenden Offsetwortes weitergeschaltet wird, das Syndromregister 10 gelöscht wird und das Datenwort nur während jedes ungeradzahligen Auslesens in das Syndromregister eingelesen wird, daß ferner beim ungeradzahligen Auslesen im Fall der Errechnung des Syndroms Null eine Synchronisierung des Blockzählers ausgelöst wird, während bei jedem geradzahligen Auslesen im Fall der Errechnung des Syndroms Null das Datenwort ausgegeben wird, andernfalls ein Versuch zur Fehlerkorrektur erfolgt.

Zur weiteren Darlegung des erfindungsgemäßen Verfahrens wird im folgenden anhand der Fig. 2 zunächst die Steuereinheit 6 näher erläutert. Da erfindungsgemäß das Auslesen des Schieberegisters 2 n-Mal je Bit-Periode erfolgt, bedarf es derzeit - bei n = 6 - der Erzeugung von zwölf Paketen von jeweils sechsundzwanzig Verschiebeimpulsen auf der Verschiebeleitung V, die in der Steuereinheit 6 erzeugt werden. Diese Verschiebeimpulse steuern sowohl das Auslesen des Schieberegisters 4 als auch das Auslesen eines ROM 21, das als Offsetwort-Generator 8 dient, und takten das Syndromregister 10.

In dem ROM 21 sind die zulässigen Offsetworte unter vorgegebenen Adressen gespeichert. Bei 4 zulässigen Offsetworten entsprechen die Adressen den Nummern der Datenblöcke in der Gruppe, bei einer größeren Anzahl von zulässigen Offsetworten stimmen die letzten beiden Stellen der Adresse mit dieser Blocknummer überein.

Im Ausführungsbeispiel, bei dem 6 zulässige Offsetworte vorgesehen sind, ruft ein 3-Bit-Zähler 20 nacheinander die einzelnen Adressen auf, sobald er jeweils einen Fortschaltimpuls erhält. Die Steuereinheit umfaßt für die Erzeugung der Verschiebeimpulse und weiterer sonstiger Taktimpulse eine Takteinheit 22, für die ein Ausführungsbeispiel in der erstgenannten älteren Patentanmeldung P 1 95 11 147.8 näher erläutert ist. Für das erste Ausführungsbeispiel des erfindungsgemäßen Verfahrens ist hier nur wesentlich, daß die Verschiebeimpulse in der Takteinheit 22 von einem ersten Generator 23 abgeleitet werden, dessen Frequenz 912 kHz beträgt, und daß die Rückstellung der Takteinheit 22 nach der Ausgabe von jeweils 26 Verschiebeimpulsen und etwa benötigter weiterer sonstiger Taktimpulse durch die Impulse eines zweiten Generators 24 erfolgt, dessen Frequenz 19 kHz beträgt und dessen Impulse ggf. den Adreßzähler 20 um eine Einheit fortschalten.

Nach der Erfindung ist nun zwischen einem ungeradzahligen Auslesen und einem geradzahligen Auslesen zu unterscheiden, weil nur zum ungeradzahligen Auslesen der Adreßzähler um eine Einheit weitergeschaltet werden soll, damit jeweils das nächste Offsetwort aus dem ROM 21 aufgerufen wird, während bei jedem geradzahligen Auslesen das Offsetwort zur Ausgabe des Datenwortes bzw. zur Fehlerkorrektur nicht verändert werden darf.

Die Unterscheidung zwischen ungeradzahligem und geradzahligem Auslesen erfolgt durch einen 1-Bit-Zähler 25 im Ausgang des zweiten Generators 24, der bei geradzahligem Stand über die Wiederholungsleitung W den Fortschalteingang des Adreßzählers 20 über eine zweite Sperrstufe 27 blockiert und die Sperrstufe 9 im Eingang des Syndromregisters 10 sperrt.

Wie bereits erwähnt, entsteht ein Synchronisierungssignal am Ausgang der Schaltungsstufe 12 immer dann, wenn nach der Syndromberechnung beim ungeradzahligen Auslesen sowohl in den ersten fünf Speicherzellen des zehn Bit speichernden Syndromregisters 10 als auch in seinen zweiten fünf Speicherzellen eine Null gespeichert ist. In einer hier nicht näher erläuterten Schwungradschaltung 18 werden die Synchronisierungssignale weiter ausgewertet. Ist der Rundfunkempfänger erst eingeschaltet worden, dann durchläuft das erste Synchronisierungssignal die Schwungradschaltung 18 unverändert und setzt den Bit-Zähler 2 auf Null. Dadurch erscheint am Ausgang des Bit-Zählers 2 auf der Blocktaktleitung B ein Impuls. Das Synchronisierungssignal auf der Synchronisierungsleitung S öffnet die Torschaltung 19, bei welcher der Stand der beiden niedrigsten Zählstufen in dem 3-Bit-Adreßzähler 20 im Offsetwort-Generator 8 in den Blockzähler 5 übertragen wird. Damit ist der Blockzähler 5 synchronisiert.

Nach der Synchronisierung beim ungeradzahligen Auslesen wird beim nachfolgenden geradzahligen Auslesen das im Schieberegister 4 enthaltene richtige Datenwort über die an die erste X-OR-Stufe 7 angeschlossene zweite X-OR-Stufe 16 und über die von der Wiederholungsleitung W gesteuerte Torschaltung 17 ausgegeben.

Ist das Syndrom bei einem ungeradzahligen Auslesen nicht zu Null berechnet worden, so können die im Schieberegister 4 derzeit gespeicherten Bits doch einen Datenblock bilden, in welchem jedoch einzelne Bits bei der Übertragung fehlerhaft geworden sind. Hat ein eventuell aufgetretenes Fehlerbündel eine Länge von maximal fünf Bits, dann sind die Bitfehler korrigierbar, falls der Blockzähler sich sechsundzwanzig Bits zuvor, d. h. bei dem vorhergehenden Datenblock, noch hat synchronisieren lassen, oder solange die Schwungradschaltung 18 noch einen Synchronlauf des Gerätes anzeigt.

Bei dem geradzahligen Auslesen zur eventuellen Fehlerkorrektur werden die am Ende der Syndromberechnung in dem Syndromregister 10 schließlich abgespeicherten Bits mittels der Verknüpfungsschleife erneut verrechnet. Zeigt sich dabei in jeder der ersten, linken fünf Zellen des Syndromregisters 10 eine Null, dann läßt sich mit Hilfe der weiteren im Syndromregister 10 gespeicherten Bits die Fehlerkorrektur durchführen, wie u. a. in der DIN EN 50 067, Seite 34, beschrieben ist.

Bei einer Variante des bisher beschriebenen Verfahrens wird das Schieberegister 4 nur (n +2) mal in jeder Bit-Periode ausgelesen. Die Verschiebeimpulse V werden dazu von einem ersten Generator 23 abgeleitet, der mit einer Frequenz von 456 kHz schwingt, während der Generator 24 zur Rückstellung der Takteinheit 22 mit einer Frequenz von 9,6 kHz arbeitet. Bei der Verfahrensvariante wird nur dann innerhalb einer Bit-Periode ein geradzahliges Auslesen eingeleitet, wenn der Stand der beiden niedrigsten Zählstufen in dem Adreßzähler 20 mit dem Blockzählerstand übereinstimmt und der Bit-Zähler 2 auf Null steht.

Der Vergleich des Blockzählerstandes und des Adreßzählerstandes 15 folgt in einer Vergleichsstufe 26, die den 1-Bit-Zähler 25 steuert. Besteht Übereinstimmung und steht zugleich der Bitzähler 2 auf Null, so wird der nächste Impuls des Generators 24 als ein geradzahliger Impuls gewertet, also ein geradzahliges Auslesen freigegeben. Dabei wird für die Dauer eines Auslesezyklus ein Steuersignal auf die Wiederholungsleitung W gegeben, welches beide Sperrstufen 9, 27 sperrt und die Torschaltung 17 freigibt. Bei dem darauffolgenden Auslesen wird der Adreßzähler 20 dann wieder weitergeschaltet und die Sperrstufe 9 geöffnet. Die Übereinstimmung zwischen dem Zählerstand des Adreßzählers 20 und des Blockzählers 5 ergibt sich zwangsläufig bei einer Synchronisierung des Blockzählers. Sie tritt aber auch im nichtsynchronen Zustand auf, wenn der Bit-Zähler 5 nur einen vom Zufall bestimmten Stand hat. Da der Adreßzähler alle Adressen während einer Bit-Periode einmal ganz durchläuft. erreicht der Adreßzählerstand in jeder Bit-Periode auch einmal den zufälligen Blockzählerstand. Es kann sich daher ergeben, daß innerhalb einer Bit-Periode zunächst ein zufallsbedingter Gleichstand von Blockzähler 5 und Adreßzähler 20 festgestellt wird und daß bei einem darauffolgenden Auslesezyklus der Blockzähler 5 vom Adreßzähler 20 her synchronisiert wird. Dieser mögliche, zweimalige Gleichstand von Adreßzähler 20 und Blockzähler 5 in einer Bit-Periode bedingt die Wahl der Anzahl der Auslesezyklen mit n +2, d. h. die Wahl von 8 Auslesezyklen und damit auch die Wahl der Anzahl von 8 Paketen von Verschiebeimpulsen und somit die Wahl der angegebenen Frequenzen der Generatoren 23 und 24.

Die Auslesezyklen müssen nicht gleichmäßig auf eine Bit-Periode verteilt werden. Bei ausreichender Schnelligkeit der Prozessoren liegt es im Rahmen der Erfindung, wenn die Summe der Auslesezyklen auch nur einen Bruchteil einer Bit-Periode beansprucht und die Einrichtung während des Restes der Bit-Periode bis zum Beginn der nächsten Bitperiode stilliegt.

## Patentansprüche

1. Einrichtung zur Synchronisierung eines Blockzählers in einem Radio-Daten-System-(RDS) Rundfunkempfänger mit einem programmgesteuerten Decoder,
mit einem einen Datenblock aufnehmenden Zwischenspeicher (4), in den die empfangenen Bits seriell eingelesen werden, mit einem Bit-Zähler (2), mit dem die Anzahl der empfangenen Bits gezählt wird,
wobei während der letzten Bitperiode des jeweils eingelesenen Datenblocks der Zwischenspeicher mindestens zweimal ausgelesen wird,
mit einer ersten XOR-Stufe (7), in der die ausgelesenen Bits seriell mit den Bits eines im Decoder von einem Offsetwort-Generator (8) erzeugten Offsetwortes verknüpft werden,
mit einem Syndromregister (10) zur Berechnung eines Syndromwertes, in das die die erste XOR-Stufe (7) verlassenden Bits bei jedem ersten Auslesen über eine Sperrstufe (9) eingelesen werden,
und mit einer im Ausgang der ersten XOR-Stufe (7) angeordneten zweiten XOR-Stufe (16), über die die die erste XOR-Stufe (7) verlassenden Bits bei jedem zweiten Auslesen unter etwaiger Fehlerkorrektur ausgegeben werden, **gekennzeichnet durch** programmgesteuerte Mittel (6, V), die den Zwischenspeicher (4) in jeder Bit-Periode bis zu 2n-mal auslesen, wobei n die Anzahl der zulässigen Offset-Worte ist, **durch** weitere Mittel (25), die ungeradzahlige Auslesezyklen von geradzahligen unterscheiden, **durch** einen Adreßzähler (20) in dem Offsetwort-Generator (8), der bei Empfang eines Fortschaltimpulses die Erzeugung des nächstfolgenden Offsetwortes bewirkt, **durch** Mittel (12), die an das Syndromregister (10) angeschlossen sind und die bei der Berechnung des Syndromwertes Null im Syndromregister (10) ein Synchronsignal liefern und danach den Bit-Zähler (2) auf Null und zugleich den Blockzähler (5) auf den Stand des Adreßzählers (20) setzen, und **durch** Mittel (25, W, 9, 27), die bei jedem geradzahligen Auslesezyklus den Fortschalteingang des Adreßzählers (20) und den Eingang des Syndromregisters (10) sperren.

2. Einrichtung nach Anspruch 1, **gekennzeichnet durch** Mittel (23, 24, V), die den Zwischenspeicher (4) in jeder Bit-Periode (n+2)-mal auslesen und **durch** Mittel (25, 27), die den Fortschalteingang des Adreßzählers (20) und den Eingang des Syndromregisters (10) zu den Zeitpunkten innerhalb einer Bit-Periode sperren, in denen der Stand des Adreßzählers (20) mit dem des Blockzählers (5) übereinstimmt.

3. Einrichtung nach Anspruch 1, **gekennzeichnet durch** Mittel (23, 24, V), die den Zwischenspeicher (4) in jeder Bit-Periode (n+2)-mal auslesen und **durch** Mittel (25, 27), die den Fortschalteingang des Adreßzählers (20) und den Eingang des Syndromregisters (10) zu den Zeitpunkten innerhalb einer Bit-Periode sperren, in denen der Stand des Blockzählers (5) mit den beiden niedrigsten Zählstufen des Adreßzählers (20) übereinstimmt.

4. Einrichtung nach Anspruch 3, **gekennzeichnet durch** Mittel (23, V), die den Zwischenspeicher (4) in jeder Bit-Periode acht Mal auslesen, und **durch** Mittel (20, 25, 26, 27), die den Adreßzähler (20) sechs Mal in jeder Bit-Periode fortschalten.

5. Einrichtung nach Anspruch 2, 3 oder 4, **gekennzeichnet durch** Mittel (B), die den Fortschalteingang des Adreßzählers (20) und den Eingang des Syndromregisters (10) in derjenigen Bit-Periode sperren, in welcher der Bit-Zähler (2) auf Null steht.

6. Programmgesteuerter Decoder mit einer Steuereinheit (6), die eine Takteinheit (22) mit einem ersten Generator (23) zur Erzeugung von Verschiebeimpulsen und einen zweiten Generator (24) zur Erzeugung von Fortschaltimpulsen umfaßt, mit einem Blockzähler (5), ferner mit einem Zwischenspeicher (4) für die empfangenen Bits, mit einer ersten XOR-Stufe (7) am Ausgang des Zwischenspeichers (4), deren zweiter Eingang an dem Ausgang eines Offsetwort-Generators (8) angeschlossen ist, sowie mit einer Sperrstufe (9) zwischen dem Ausgang der XOR-Stufe (7) und dem Eingang eines Syndromregisters (10), **gekennzeichnet durch** einen Adresszähler (20) in dem Offsetwort-Generator (8) zur Fortschaltung des Offsetwort-Generators zur Erzeugung des nächsten Offsetwortes und **durch** eine zweite Sperrstufe (27), die zwischen dem Ausgang des zweiten Generators (24) in der Takteinheit (22) und im Fortschalteingang des Adresszählers (20) liegt, und **durch** einen 1-Bit-Zähler (25), der die Impulse des zweiten Generators (24) zählt und über die Wiederholungsleitung (W) die erste Sperrstufe (9) im Eingang des Syndromregisters (10) und die zweite Sperrstufe (27) bei geradzahligen Generatorimpulsen blockiert.

## Claims

1. , Device for synchronizing a block counter in a radio data system (RDS) broadcast radio receiver having a program-controlled decoder,
having a buffer-store (4) which holds a data block and into which the received bits are read serially,
having a bit counter (2) which is used to count the number of bits received,
the buffer-store being read at least twice during the last bit period of the respective data block which is read in,
having a first XOR stage (7) in which the bits which are read out are logically combined serially with the bits of an offset word produced in the decoder by an offset-word generator (8),
having a syndrome register (10) for calculating a syndrome value, into which syndrome register the bits leaving the first XOR stage (7) are read via a disabling stage (9) whenever they are first read out,
and having a second XOR stage (16) which is arranged in the output of the first XOR stage (7) and via which the bits leaving the first XOR stage (7) are output with any error correction whenever they are read out a second time, **characterized by** program-controlled means (6, V) which read the buffer-store (4) up to 2n times in every bit period, where n is the number of permissible offset words, by further means (25) which distinguish uneven-numbered read-out cycles from even-numbered ones, by an address counter (20) in the offset- word generator (8) which, upon receiving an increment pulse, causes the next offset word to be generated, by means (12) which are connected to the syndrome register (10) and, upon calculation of the syndrome value zero in the syndrome register (10), deliver a sync signal and then set the bit counter (2) to zero and at the same time set the block counter (5) to the reading on the address counter (20), and by means (25, W, 9, 27) which, for every even-numbered read-out cycle, disable the increment input on the address counter (20) and the input on the syndrome register (10).

2. Device according to Claim 1, **characterized by** means (23, 24, V) which read the buffer-store (4) (n+2) times in each bit period and by means (25, 27) which disable the increment input on the address counter (20) and the input on the syndrome register (10) at those times within a bit period at which the reading on the address counter (20) matches that on the block counter (5) .

3. Device according to Claim 1, **characterized by** means (23, 24, V) which read the buffer-store (4) (n+2) times in each bit period and by means (25, 27) which disable the increment input on the address counter (20) and the input on the syndrome register (10) at those times within a bit period at which the reading on the block counter (5) matches the two lowest count levels of the address counter (20).

4. Device according to Claim 3, **characterized by** means (23, V) which read the buffer-store (4) eight times in each bit period, and by means (20, 25, 26, 27) which increment the address counter (20) six times in each bit period.

5. Device according to Claim 2, 3 or 4, **characterized by** means (B) which disable the increment input on the address counter (20) and the input on the syndrome register (10) in that bit period in which the bit counter (2) is at zero.

6. Program-controlled decoder having a control unit (6) which comprises a clock unit (22) having a first generator (23) for generating shift pulses and a second generator (24) for generating increment pulses, having a block counter (5), also having a buffer-store (4) for the bits received, having a first XOR stage (7) at the output of the buffer-store (4), the second input of which XOR stage (7) is connected to the output of an offset-word generator (8), and having a disabling stage (9) between the output of the XOR stage (7) and the input of a syndrome register (10), **characterized by** an address counter (20) in the offset-word generator (8) for incrementing the offset-word generator in order to generate the next offset word and by a second disabling stage (27) which is arranged between the output of the second generator (24) in the clock unit (22) and the increment input of the address counter (20), and by a one-bit counter (25) which counts the pulses from the second generator (24) and uses the repetition line (W) to block the first disabling stage (9) in the input of the syndrome register (10) and the second disabling stage (27) for even-numbered generator pulses.

## Revendications

1. Dispositif pour la synchronisation d'un compteur de blocs dans un récepteur de radio du type système de données radio (RDS), comprenant un décodeur commandé par programme, dans lequel
- une mémoire intermédiaire (4) reçoit un bloc de données, dans laquelle les bits reçus sont introduits en série,
- un compteur de bits (2) compte le nombre des bits reçu,
- pendant la dernière période de bit du bloc de données lu, la mémoire intermédiaire est lue au moins deux fois,
- dans un premier étage XOR (7), les bits lus sont combinés en série avec les bits d'un mot offset produit dans le décodeur par un générateur de mots offset (8),
- un registre de syndrome (10) est destiné à calculer une valeur de syndrome, dans lequel les bits qui quittent le premier étage XOR (7) sont introduits par l'intermédiaire d'un étage de verrouillage (6) à chaque première lecture, et
- un deuxième étage XOR (16) est disposé dans la sortie du premier étage XOR (7), par l'intermédiaire duquel les bits qui quittent le premier étage XOR (7) sont émis à chaque deuxième lecture, avec correction éventuelle des erreurs,
**caractérisé par**
des moyens commandés par programme (6, v) qui lisent la mémoire intermédiaire (4) jusqu'à 2n fois dans chaque période de bit, n étant le nombre des mots offset admissible,
d'autres moyens (25) qui distinguent les cycles de lecture impairs des cycles pairs,
un compteur d'adresses (20) logé dans le générateur de mots offset (8) qui détermine, lors de la réception de suite la production du mot offset suivant,
des moyens (12) qui sont connectés au registre de syndrome et qui, lorsque la valeur de syndrome est calculée nulle, fournissent dans leur registre de syndrome (10) un signal synchrone et, ensuite, mettent le compteur de bits (2) à zéro et, en même temps, mettent le compteur de blocs (5) à l'état du compteur d'adresses (20), et
des moyens (25, W, 9, 27) qui, à chaque cycle de lecture pair, verrouillent l'entrée de suite du compteur d'adresse (20) et l'entrée du registre de syndrome (10).

2. Dispositif selon la revendication 1,
**caractérisé par**
des moyens (23, 24, V) qui lisent la mémoire intermédiaire (4) (n+2) fois dans chaque période de bits, et des moyens (25, 27) qui verrouillent l'entrée d'avance du compteur d'adresses (20) et l'entrée du registre de syndrome (10) aux instants compris dans une période de bit auxquels l'état du compteur d'adresses (20) correspond à celui du compteur de blocs (5).

3. Dispositif selon la revendication 1,
**caractérisé par**
des moyens (23, 24, V) qui lisent la mémoire intermédiaire (4) (n +2) fois dans chaque période de bit, et des moyens (25, 27) qui verrouillent l'entrée d'avance du compteur d'adresses (20) et l'entrée du registre de syndrome (10) aux instants compris dans d'une période de bit auxquels l'état du compteur de blocs (5) correspond aux deux étages de comptage extrêmes inférieurs du compteur d'adresses (20).

4. Dispositif selon la revendication 3,
**caractérisé par**
des moyens (23, V) qui lisent huit fois la mémoire intermédiaire (4) dans chaque période de bit et des moyens (20, 25, 26, 27) qui avancent le compteur d'adresses (20) six fois dans chaque période de bit.

5. Dispositif selon la revendication 2, 3 ou 4
**caractérisé par**
des moyens (B) qui verrouillent l'entrée d'avance du compteur d'adresses (20) et l'entrée du registre de syndrome (10) dans la période de bit dans laquelle le compteur de bit (2) est à zéro.

6. Décodeur commandé par programme
comprenant une unité de commande (6) qui comprend elle-même une unité d'horloge (22) contenant un premier générateur (23) destiné à la production d'impulsions de décalage et un deuxième générateur (24) destiné à la production d'impulsions d'avance, un compteur de blocs (5), en outre une mémoire intermédiaire (4) pour les bits reçus, un premier étage XOR (7) à la sortie de la mémoire intermédiaire (4) dont la deuxième entrée est connectée à la sortie de générateur de mots offset (8), ainsi qu'un étage de verrouillage (9) placé entre la sortie de l'étage XOR (7) et l'entrée d'un registre de syndrome (10),
**caractérisé par**
un compteur d'adresses (20) contenu dans le générateur de mots offset (8) pour l'avance du générateur de mots offset pour la production du mot offset suivant,
un deuxième étage de verrouillage (27) qui se trouve entre la sortie du deuxième générateur (24) contenu dans l'unité d'horloge (22) et dans l'entrée d'avance du compteur d'adresses (20), et
un compteur à 1 bit (25) qui compte les impulsions du deuxième générateur (24) et bloque, par l'intermédiaire du conducteur de répétition (W), le premier étage de verrouillage (9) contenu dans l'entrée du registre de syndrome (10) et le deuxième étage de verrouillage (27) en présence d'impulsions paires du générateur.
